# EUROPEAN PATENT SPECIFICATION

(11) **EP 2 731 851 B1**
(45) Date of publication and mention of the grant of the patent: **09.09.2015**
(21) Application number: 11782210.6
(22) Date of filing: 12.07.2011
(51) Int. Cl.: B62D 5/06

(54) **POWER STEERING SYSTEM WITH IMPROVED COOLING FOR A VEHICLE**
SERVOLENKSYSTEM MIT VERBESSERTER KÜHLUNG FÜR EIN FAHRZEUG
SYSTÈME DE DIRECTION ASSISTÉE AVEC REFROIDISSEMENT AMÉLIORÉ POUR VÉHICULE

(43) Date of publication of application: 21.05.2014
(73) Proprietor: Volvo Lastvagnar AB, 405 08 Göteborg (SE)
(72) Inventor: BLOND, Jean-Marc, F-69780 Saint Pierre de Chandieu (FR); DORAY, Jean-Baptiste, F-38670 Chasse sur Rhône (FR)
(74) Representative: Faucheux, Jérôme
(86) International application number: PCT/IB2011/002306
(87) International publication number: WO 2013/008051

(56) References cited:
- EP-A1- 1 647 466
- JP-A- 2006 044 315

## Description

### Field of the invention

The present invention relates to a hydraulic power steering system for a vehicle, especially an industrial vehicle such as a heavy truck.

### Technological background

A hydraulic power steering system has been a standard feature in vehicles for many years, in particular in industrial vehicles. Such a system assists the vehicle driver by applying a force to the wheels, through a hydraulic steering actuator, which complements the effort of the driver which is mechanically transmitted from the steering wheel to the steered wheels of the vehicle. Therefore, a lower effort is required from the driver when turning the steering wheel and the vehicle is easier to manoeuvre.

A hydraulic power steering system typically comprises a hydraulic circuit carrying a pressurized fluid - such as oil - from a tank to the steering actuator, by means of a pump.

The invention relates more particularly to hydraulic power steering systems in which the pump is driven by an electric motor assembly. The average power required by such an electro hydraulic power steering system is usually fairly low. However, in some operating conditions, for example during parking manoeuvres, the required power can reach peaks which can be up to 10 times greater than the average required power.

Because of this, downsizing the electric motor of such a system can be envisaged. However, this results in a need for cooling the electric motor assembly, especially for the motor itself and also for the motor control unit, especially during the phases when the required power is high.

Document JP 2006 044315 A describes a hydraulic power steering system according to the preamble of claim 1.

Conventional cooling means which could be adapted for this purpose are not fully satisfactory. One the one hand, air cooling is not effective enough in industrial vehicles. On the other hand, water cooling involves the implementation of a dedicated circuit, which is complicated and expensive.

It therefore appears that, from several standpoints, there is room for improvement in power steering systems.

### Summary

It is an object of the present invention to provide an improved power steering system which can overcome the drawbacks encountered in conventional electro hydraulic power steering systems.

Another object of the present invention is to provide a power steering system in which the electric motor assembly driving the hydraulic pump can be efficiently cooled, without requiring complicated and/or expensive developments.

The invention therefore relates to a power steering system for a vehicle, comprising a hydraulic circuit carrying a power steering fluid and including a main loop having a fluid tank, a steering actuator and a pump which is driven by an electric motor assembly.

According to the invention, the hydraulic circuit of the power steering system further comprises an auxiliary loop branching from main loop at a derivation point and designed to bring a portion of said fluid in thermal contact with the electric motor assembly so as to cool said motor assembly, and to carry said portion of fluid back to the main loop at a return point.

In other words, the cooling fluid is the same as the power steering fluid, part of which is diverted in the auxiliary loop acting as a cooling loop. Said auxiliary loop is arranged in parallel with the main loop, which ensures that a cooling effect can be achieved even if no power steering is required. It has to be noted that the fluid flowing in said auxiliary loop does not go through the steering actuator.

Preferably, the invention concerns electro hydraulic power steering systems having only one type of actuator, which is hydraulic, and not including another types of actuators, such as electric actuators.

The invention makes it possible to efficiently cool the electric motor assembly with a compact arrangement having a low impact on the overall cost of the system.

Indeed, by using the power steering fluid as the cooling fluid, the cooling efficiency is increased with respect to air cooling. Furthermore, no complicated arrangement is required as compared to water cooling, since only one fluid is used for both power steering and cooling. Moreover, if the the derivation point for the auxiliary loop is advantageously positioned in the low pressure side of the main loop, i.e. downstream from a directional control valve and upstream from the tank, said auxiliary loop can be dimensioned smaller because it is then exposed to lower pressure levels, which makes it possible to make the system more compact and less expensive.

Thus, the invention makes it possible to downsize the electric motor without substantially increasing the cooling cost. The invention is also advantageous in terms of packaging, manufacturing and maintenance.

In practice, the auxiliary loop can be devoid of any dedicated cooler for the fluid. Indeed, the pipes of said auxiliary loop which carry the fluid are in contact with ambient air and should in most cases be sufficient for removing calories from the fluid which has been heated in contact with the electric motor assembly and possible other components to be cooled. Also, the liquid may be cooled by its presence in the tank.

These and other features and advantages will become apparent upon reading the following description in view of the drawing attached hereto representing, as non-limifing examples, embodiments of a vehicle according to the invention.

### Brief description of the drawings

The following detailed description of several embodiments of the invention is better understood when read in conjunction with the appended drawings being understood, however, that the invention is not limited to the specific embodiments disclosed.
Figure 1 is a schematic drawing of power steering system according to a first embodiment the invention,
Figure 2 is a schematic drawing of power steering system according to a second embodiment the invention,
Figure 3 is a schematic drawing of power steering system according to a third embodiment the invention.

### Detailed description of the invention

A vehicle (not shown) such as a truck typically comprises a traction engine which is able to drive the drive wheels of the vehicle through a driveline. The steering of the wheels is controlled by a device comprising a mechanical transmission of the movement from a steering wheel of the vehicle to at least one of the wheels.

The vehicle further comprises a power steering system 1 in order to assist the driver in steering the vehicle.

As this is illustrated in the figures, the power steering system 1 comprises a hydraulic circuit 2 which carries a power steering fluid, typically oil. The hydraulic circuit 2 includes a main closed loop 3 in which the fluid can flow from a fluid tank 4 to a hydraulic steering actuator 5 and then back to the fluid tank 4. The fluid is moved in the main loop 3 by means of a pump 6 which is , arranged between the fluid tank 4 and the actuator 5 and which is driven by an electric motor assembly comprising an electric motor 7. The electric motor assembly may comprise also a motor control unit 15 which may comprise a power electronic circuit and/or a control electronic circuit.

In the present application, the words "upstream" and "downstream" are used considering the direction of the fluid flow in the hydraulic circuit 2, from the fluid tank 4 as the starting point and back to said fluid tank 4. In the shown embodiments, the tank 4 is not pressurized.

The actuator 5 can be a two way actuator which receives pressurized fluid in one of its two chambers 8, 9 depending on the torque exerted by the driver on the steering wheel, in order to provide a steering assistance.

The hydraulic circuit 2 may further include a directional control valve 10 located in main loop 3. Said directional control valve 10 is preferably proportional. It is preferably capable of directing the fluid towards the steering actuator 5 and to by-pass said actuator 5 when no steering assistance is needed. Such type of valve is known as "open center". More precisely, said valve 10 can occupy three main positions, i.e.: one position in which the fluid is directed towards the first chamber 8 of the actuator 5 and removed from the second chamber 9 thereof, one position in which the fluid is directed towards the second chamber 9 and removed from the first chamber 8, and one position (illustrated in the figures) in which the fluid does not go through the actuator 5 and therefore flows only in a sub loop 11 of main loop 3, the actuator 5 being by-passed. When said valve is proportional, it can occupy any position between these main positions with a corresponding proportional effect on the amount of fluid allowed to flow through the valve to and from each chamber 8, 9.

According to the invention, the hydraulic circuit 2 comprises an auxiliary loop 12 branching from main loop 3 at a derivation point 13. Said auxiliary loop 12 is designed to bring a portion of the power steering fluid in thermal contact with the electric motor assembly so as to cool said the electric motor 7 and/or the control unit 15, and to carry said portion of fluid back to the main loop 3 at a return point 14.

The motor control unit 15 can be integrated in a housing with the electric motor 7 or can be a separate unit, as illustrated in the figures. The motor control unit 15 can be connected by appropriate means 16 to a vehicle databus and to an energy storage system (not shown).

In concrete terms, in an implementation of the invention, the auxiliary loop 12 of the hydraulic circuit 2 comprises pipes that direct the fluid firstly into the heat sink 17 of the motor control unit 15 and then into the cooling body of the electrical motor 7.

As a result, a portion of the power steering fluid is diverted from the main loop 3 in the auxiliary loop 12 and is used as a cooling fluid for the electric motor assembly such as for the electric motor 7 and/or the motor control unit 15. Advantageously, the pipes and hydraulic components of the auxiliary loop 12 act as heat exchangers with ambient air so that, in most implementations, no specific heat exchanger would be needed to cool the fluid which has been heated while cooling the electric motor 7 and the motor control unit 15.

Preferably, the derivation point 13 and the return point 14 can be located on the sub loop 11 of main loop 3. With this arrangement, even if no steering assistance is needed, there can be some fluid flowing in the auxiliary loop 12, i.e. some cooling effect in the motor 7 and motor control unit 15.

According to a possible implementation of the invention, the hydraulic circuit 2 can be designed so that the fluid flow in auxiliary loop 12 is substantially a set portion of the fluid flow in main loop.

Alternatively, in another possible implementation of the invention, the hydraulic circuit 2 can be designed so that the fluid flow in auxiliary loop 12 is substantially a set amount whatever the fluid flow in main loop 3, when the pump 6 is in operation. This arrangement is advantageous because it ensures that the system may be controlled so that, when there is no need of steering assistance but there is a need of cooling the electric motor assembly, the pump needs only to deliver the flow needed in the auxiliary loop 12.

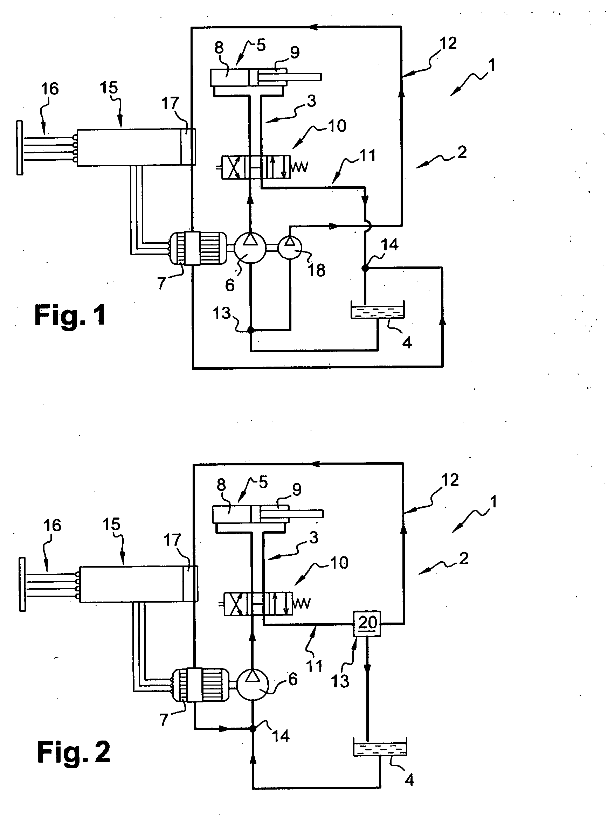

Reference is now made to Figure 1 which depicts a first embodiment of the power steering system 1 of the invention.

In this first embodiment, the derivation point 13 can be located downstream from the fluid tank 4 and upstream from the pump 6. Thus, to make the fluid flow in the auxiliary loop 12, said auxiliary loop 12 includes an auxiliary pump 18 which is preferably driven by said electric motor 7. As a result, if both pumps 6, 18 are fixed capacity pumps, the fluid flow in the auxiliary loop 12 is substantially a set portion of the fluid flow in main loop 3, said portion depending on the displacements of both pumps 6, 18. By way of an example, the flow in the auxiliary loop 12 can be around one quarter of the flow in the main loop 3. This can be achieved, for example, with a main pump 6 having a displacement of 4 cm³ and an auxiliary pump 18 having a displacement of 1 cm³. Alternatively, the auxiliary pump 18 could be a variable capacity pump, so as to be able to vary the ratio of fluid circulating in the auxiliary loop compared to the flow of fluid in the main loop.

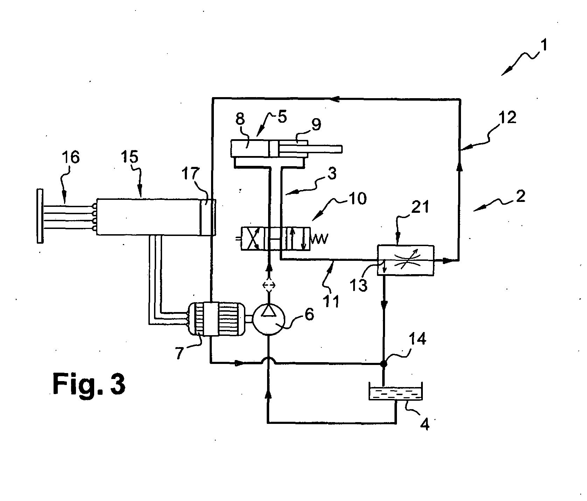

In other embodiments, as the second and third embodiments illustrated in Figures 2 and 3 respectively, the derivation point 13 can be located downstream from the pump 6 of the main loop 3 while the return point 14 can be located upstream from the pump 6.

With such an arrangement, the auxiliary loop 12 can be devoid of any auxiliary pump since the fluid in both loops is moved by the pump 6 of main loop 3. This results in the overall system being more compact and less expensive.

The derivation point 13 can be located downstream from the directional control valve 10, and therefore from the steering actuator, 5 and upstream from the fluid tank 4, as this is illustrated in Figures 2 and 3. Thereby, the auxiliary circuit is on the low pressure side of the circuit and does not need to be designed to handle excessive pressure levels.

As regards the return point 14, it can be located downstream from the fluid tank 4 and upstream from the pump 6 (as, for example, in Figure 2) or downstream from the derivation point 13 and upstream from the fluid tank 4 (as, for example, in Figure 1 and in Figure 3). However, in the embodiment of Figure 2, the return point 14 could be located downstream from the derivation point 13 and upstream from the fluid tank 4. Similarly, in the embodiment of Figure 3, the return point 14 could be located downstream from the fluid tank 4 and upstream from the pump 6. Alternatively, in all embodiments the return point could be directly to the tank.

According to the second embodiment illustrated in Figure 2, the hydraulic circuit 1 comprises, at the derivation point 13, a flow divider 20 capable of directing a set portion of the fluid flowing in main loop 3 towards the auxiliary loop 12. For example, the flow divider 20 can be designed so that the flow in the auxiliary loop 12 is around one quarter of the flow in the main loop 3.

According to the third embodiment illustrated in Figure 3, the hydraulic circuit 1 comprises, at the derivation point 13, a priority flow control valve 21 capable of directing a set amount of fluid towards the auxiliary loop 12. Said priority flow control valve 21 is capable of providing a determined fluid flow in the auxiliary loop 12 whatever the fluid flow in the main loop 3, provided that pump 6 is controlled to deliver at least said determined fluid flow. It therefore gives priority on the auxiliary loop 12 where it maintains a full flow ensuring a full cooling capacity for the motor 7 and the motor control unit 15, even if for example only half of the full fluid flow is needed for the actuator. Preferably, the fluid flow in the auxiliary loop 12 can be maintained to a determined fixed value.

By way of an example, the maximum flow rate in the main loop 3 can be around 16 l/min and the constant flow rate in the auxiliary loop 12 can be around 4 l/min. With this arrangement, 4 l/min are permanently provided for the cooling needs as soon as the flow delivered by the pump 6 is greater or equal to 4l/min. If no power steering is needed, the flow rate in main loop 3 downstream of the derivation point 13 can be zero or almost zero while the system 1 maintains a flow rate of 4 l/min in the auxiliary loop 12.

This can be useful for example after a long phase of manoeuvres when high demands have been made on the motor 7. In such a situation, the motor 7 still needs cooling, even after the vehicle engine has been turned off, and this cooling can be achieved by the fluid still flowing in the auxiliary loop at the determined flow rate (for example 4 l/min).

Of course, the invention is not restricted to the embodiments described above by way of non-limiting examples, but on the contrary it encompasses all embodiments within the scope of the appending claims.

## Claims

1. A hydraulic power steering system for a vehicle comprising a hydraulic circuit (2) carrying a power steering fluid and including a main loop (3) having a fluid tank (4), a steering actuator (5) and a pump (6) which is driven by an electric motor assembly (7, 15), wherein the hydraulic circuit (2) further comprises an auxiliary loop (12) branching from main loop (3) at a derivation point (13) **characterised by** being designed to bring a portion of said fluid in thermal contact with the electric motor assembly (7, 15) so as to cool said assembly (7, . 15), and to carry said portion of fluid back to the main loop (3) at a return point (14).

2. The hydraulic power steering system according to claim 1, **characterized in that** the electric motor assembly comprises at least an electric motor (7) and a motor control unit (15) for controlling the electric motor (7), the auxiliary loop (12) of the hydraulic circuit (2) being designed to bring said fluid portion in thermal contact with the motor control unit (15) and/or with the electric motor (7) so as to cool it.

3. The hydraulic power steering system according to claim 1 or claim 2, **characterized in that** the hydraulic circuit (2) includes a directional control valve (10) located in main loop (3) and capable of directing the fluid towards the steering actuator (5) and to by-pass said actuator (5) when no steering assistance is needed, the fluid then flowing only in a sub loop (11) of main loop (3), the derivation and return points (13, 14) being located on said sub loop (11).

4. The hydraulic power steering system according to any one of claims 1 to 3, **characterized in that** the hydraulic circuit (2) is designed so that the fluid flow in auxiliary loop (12) is substantially a set portion of the fluid flow in main loop (3).

5. The hydraulic power steering system according to any one of claims 1 to 3, **characterized in that** the hydraulic circuit (2) is designed so that the fluid flow in auxiliary loop (12) is substantially a set amount whatever the fluid flow in main loop (3), when the pump (6) delivers at least said set amount.

6. The hydraulic power steering system according to any one of claims 1 to 5, **characterized in that** the derivation point (13) is located downstream from the fluid tank (4) and upstream from the pump (6), the auxiliary loop (12) including an auxiliary pump (18) which is driven by said electric motor (7).

7. The hydraulic power steering system according to any one of claims 1 to 5, **characterized in that** the derivation point (13) is located downstream from the pump (6).

8. The hydraulic power steering system according to any one of claims 1 to 5 or 7, **characterized in that** the derivation point (13) is located downstream from the steering actuator (5) and upstream from the fluid tank (4).

9. The hydraulic power steering system according to any preceding claim, **characterized in that** the return point (14) is located downstream from the fluid tank (4) and upstream from the pump (6).

10. The hydraulic power steering system according to any of claims 1 to 8, **characterized in that** the return point (14) is located downstream from the derivation point (13) and upstream from the fluid tank (4).

11. The hydraulic power steering system according to any of claims 1 to 8, **characterized in that** the return point (14) is located directly at the fluid tank (4).

12. The hydraulic power steering system according to any one of claims 7 to 11, **characterized in that** the hydraulic circuit (2) comprises, at the derivation point (13), a flow divider (20) capable of directing a set portion of the fluid flowing in main loop (3) towards the auxiliary loop (12).

13. The hydraulic power steering system according to any one of claims 7 to 11, **characterized in that** the hydraulic circuit (2) comprises, at the derivation point (13), a priority flow control valve (21) capable of directing a set amount of fluid towards the auxiliary loop (12).

## Patentansprüche

1. Servolenksystem für ein Fahrzeug mit einem Hydraulikkreis (2), der ein Servolenkfluid führt und eine Hauptschleife (3) mit einem Fluidtank (4), einem Lenkstellglied (5) und einer Pumpe (6) aufweist, die von einer Elektromotoranordnung (7, 15) angetrieben wird, wobei der Hydraulikkreis (2) außerdem eine Hilfsschleife (12) umfasst, die von der Hauptschleife (3) an einem Abzweigpunkt (13) abzweigt, **dadurch gekennzeichnet, dass** sie so ausgelegt ist, dass sie einen Teil des Fluids in thermischen Kontakt mit der Elektromotoranordnung (7, 15) bringt, um die Anordnung (7, 15) zu kühlen, und den Teil des Fluids an einem Rückkehrpunkt (14) zurück zu der Hauptschleife (3) führt.

2. Servolenksystem nach Anspruch 1, **dadurch gekennzeichnet, dass** die Elektromotoranordnung wenigstens einen Elektromotor (7) und eine Motorsteuereinheit (15) zur Steuerung des Elektromotors (7) umfasst, wobei die Hilfsschleife (12) des Hydraulikkreises (2) so ausgelegt ist, dass sie den Fluidteil in thermischen Kontakt mit der Motorsteuereinheit (15) und/oder mit dem Elektromotor (7) bringt, um sie/ihn zu kühlen.

3. Servolenksystem nach Anspruch 1 oder 2, **dadurch gekennzeichnet, dass** der Hydraulikkreis (2) ein Wegeventil (10) aufweist, das in der Hauptschleife (3) angeordnet ist und das Fluid in Richtung des Lenkstellglieds (5) und zur Umgehung des Stellglieds (5) richten kann, wenn keine Lenkhilfe erforderlich ist, wobei das Fluid dann nur in einer Nebenschleife (11) der Hauptschleife (3) strömt, wobei der Abzweigungspunkt und der Rückkehrpunkt (13, 14) an der Nebenschleife (11) angeordnet sind.

4. Servolenksystem nach irgendeinem der Ansprüche 1 bis 3, **dadurch gekennzeichnet, dass** der Hydraulikkreis (2) so ausgelegt ist, dass die Fluidströmung in der Hilfsschleife (12) im Wesentlichen ein gesetzter Teil der Fluidströmung in der Hauptschleife (3) ist.

5. Servolenksystem nach irgendeinem der Ansprüche 1 bis 3, **dadurch gekennzeichnet, dass** der Hydraulikkreis (2) so ausgelegt ist, dass die Fluidströmung in der Hilfsschleife (12) im Wesentlichen eine gesetzte Menge ist, wie auch immer die Fluidströmung in der Hauptschleife (3) ist, wenn die Pumpe (6) wenigstens die gesetzte Menge fördert.

6. Servolenksystem nach irgendeinem der Ansprüche 1 bis 5, **dadurch gekennzeichnet, dass** der Abzweigungspunkt (13) stromabwärts des Fluidtanks (4) und stromaufwärts der Pumpe (6) angeordnet ist, wobei die Hilfsschleife (12) eine Hilfspumpe (18) aufweist, die von dem Elektromotor (7) angetrieben wird.

7. Servolenksystem nach irgendeinem der Ansprüche 1 bis 5, **dadurch gekennzeichnet, dass** der Abzweigungspunkt (13) stromabwärts der Pumpe (6) angeordnet ist.

8. Servolenksystem nach irgendeinem der Ansprüche 1 bis 5 oder 7, **dadurch gekennzeichnet, dass** der Abzweigungspunkt (13) stromabwärts des Lenkstellglieds (5) und stromaufwärts des Fluidtanks (4) angeordnet ist.

9. Servolenksystem nach irgendeinem vorhergehenden Anspruch, **dadurch gekennzeichnet, dass** der Rückkehrpunkt (14) stromabwärts des Fluidtanks (4) und stromaufwärts der Pumpe (6) angeordnet ist.

10. Servolenksystem nach irgendeinem der Ansprüche 1 bis 8, **dadurch gekennzeichnet, dass** der Rückkehrpunkt (14) stromabwärts des Abzweigungspunkts (13) und stromaufwärts des Fluidtanks (4) angeordnet ist.

11. Servolenksystem nach irgendeinem der Ansprüche 1 bis 8, **dadurch gekennzeichnet, dass** der Rückkehrpunkt (14) direkt an dem Fluidtank (4) angeordnet ist.

12. Servolenksystem nach irgendeinem der Ansprüche 7 bis 11, **dadurch gekennzeichnet, dass** der Hydraulikkreis (2) an dem Abzweigungspunkt (13) einen Strömungsteiler (20) umfasst, der einen gesetzten Teil des in der Hauptschleife (3) strömenden Fluids in Richtung der Hilfsschleife (12) richten kann.

13. Servolenksystem nach irgendeinem der Ansprüche 7 bis 11, **dadurch gekennzeichnet, dass** der Hydraulikkreis (2) an dem Abzweigungspunkt (13) ein Vorrangsströmungssteuerventil (21) umfasst, das eine gesetzte Menge des Fluids in Richtung der Hilfsschleife (12) richten kann.

## Revendications

1. Système de direction assistée hydraulique pour un véhicule comprenant un circuit hydraulique (2) transportant un fluide de direction assistée et comportant une boucle principale (3) ayant un réservoir de fluide (4), un actionneur de direction (5) et une pompe (6) entraînée par un ensemble de moteur électrique (7, 15), le circuit hydraulique (2) comprenant en outre une boucle auxiliaire (12) partant de la boucle principale (3) au niveau d'un point de dérivation (13), **caractérisé en ce qu'**il est conçu pour amener une portion dudit fluide en contact thermique avec l'ensemble de moteur électrique (7, 15) de manière à refroidir ledit ensemble (7, 15) et à transporter ladite portion du fluide pour le ramener dans la boucle principale (3) au niveau d'un point de retour (14).

2. Système de direction assistée hydraulique selon la revendication 1, **caractérisé en ce que** l'ensemble de moteur électrique comprend au moins un moteur électrique (7) et une unité de commande de moteur (15) pour commander le moteur électrique (7), la boucle auxiliaire (12) du circuit hydraulique (2) étant conçue pour amener ladite portion de fluide en contact thermique avec l'unité de commande de moteur (15) et/ou avec le moteur électrique (7) de manière à le ou la refroidir.

3. Système de direction assistée hydraulique selon la revendication 1 ou la revendication 2, **caractérisé en ce que** le circuit hydraulique (2) comporte une soupape de commande directionnelle (10) située dans la boucle principale (3) et capable de diriger le fluide vers l'actionneur de direction (5) et de contourner ledit actionneur (5) lorsqu'une direction assistée n'est pas requise, le fluide s'écoulant alors uniquement dans une sous-boucle (11) de la boucle principale (3), les points de dérivation et de retour (13, 14) étant situés sur ladite sous-boucle (11).

4. Système de direction assistée hydraulique selon l'une quelconque des revendications 1 à 3, **caractérisé en ce que** le circuit hydraulique (2) est conçu de telle sorte que l'écoulement de fluide dans la boucle auxiliaire (12) soit substantiellement une portion fixe de l'écoulement de fluide dans la boucle principale (3).

5. Système de direction assistée hydraulique selon l'une quelconque des revendications 1 à 3, **caractérisé en ce que** le circuit hydraulique (2) est conçu de telle sorte que l'écoulement de fluide dans la boucle auxiliaire (12) soit substantiellement une portion fixe, quel que soit l'écoulement de fluide dans la boucle principale (3), lorsque la pompe (6) distribue au moins ladite quantité fixe.

6. Système de direction assistée hydraulique selon l'une quelconque des revendications 1 à 5, **caractérisé en ce que** le point de dérivation (13) est situé en aval du réservoir de fluide (4) et en amont de la pompe (6), la boucle auxiliaire (12) comportant une pompe auxiliaire (18) qui est entraînée par ledit moteur électrique (7).

7. Système de direction assistée hydraulique selon l'une quelconque des revendications 1 à 5, **caractérisé en ce que** le point de dérivation (13) est situé en aval de la pompe (6).

8. Système de direction assistée hydraulique selon l'une quelconque des revendications 1 à 5 ou 7, **caractérisé en ce que** le point de dérivation (13) est situé en aval de l'actionneur de direction (5) et en amont du réservoir de fluide (4).

9. Système de direction assistée hydraulique selon l'une quelconque des revendications précédentes, **caractérisé en ce que** le point de retour (14) est situé en aval du réservoir de fluide (4) et en amont de la pompe (6).

10. Système de direction assistée hydraulique selon l'une quelconque des revendications 1 à 8, **caractérisé en ce que** le point de retour (14) est situé en aval du point de dérivation (13) et en amont du réservoir de fluide (4).

11. Système de direction assistée hydraulique selon l'une quelconque des revendications 1 à 8, **caractérisé en ce que** le point de retour (14) est situé directement au niveau du réservoir de fluide (4).

12. Système de direction assistée hydraulique selon l'une quelconque des revendications 7 à 11, **caractérisé en ce que** le circuit hydraulique (2) comprend, au niveau du point de dérivation (13), un diviseur d'écoulement (20) capable de diriger une portion fixe du fluide s'écoulant dans la boucle principale (3) vers la boucle auxiliaire (12).

13. Système de direction assistée hydraulique selon l'une quelconque des revendications 7 à 11, **caractérisé en ce que** le circuit hydraulique (2) comprend, au niveau du point de dérivation (13), une soupape de commande d'écoulement prioritaire (21) capable de diriger une quantité fixe de fluide vers la boucle auxiliaire (12).
